# EUROPÄISCHE PATENTSCHRIFT

(11) **EP 2 810 350 B1**
(45) Veröffentlichungstag und Bekanntmachung des Hinweises auf die Patenterteilung: **24.10.2018**
(21) Anmeldenummer: 12711814.9
(22) Anmeldetag: 13.03.2012
(51) Int. Cl.: H02J 1/00, H02J 1/06, H02J 1/08, H02J 3/36

(54) **ENERGIEVERTEILANLAGE**
ENERGY DISTRIBUTION DEVICE
DISPOSITIF DE DISTRIBUTION D' ÉNERGIE

(43) Veröffentlichungstag der Anmeldung: 10.12.2014
(73) Patentinhaber: Siemens Aktiengesellschaft, 80333 München (DE)
(72) Erfinder: SCHUSTER, Dominik, 82407 Wielenbach (DE); GAMBACH, Herbert, 91080 Uttenreuth (DE)
(86) Internationale Anmeldenummer: PCT/EP2012/054358
(87) Internationale Veröffentlichungsnummer: WO 2013/135272

(56) Entgegenhaltungen:
- WO-A1-95/15605
- WO-A1-2009/059629
- WO-A1-2011/029480
- DE-A1- 1 538 266
- DE-A1- 2 538 511
- US-A1- 2009 196 077

## Beschreibung

Die Erfindung bezieht sich auf eine Energieverteilanlage mit den Merkmalen gemäß dem Oberbegriff des Patentanspruchs 1.

Energieverteilanlagen zum Verteilen elektrischer Energie auf der Basis von Gleichstrom bzw. Gleichspannung umfassen bekanntermaßen eine Mehrzahl von Anschlussstellen, an denen elektrischer Gleichstrom in die Energieverteilanlage eingespeist oder aus dieser entnommen werden kann. Darüber hinaus ist üblicherweise eine Mehrzahl an Schaltern vorhanden, deren jeweilige Schaltstellung den Stromfluss innerhalb der Energieverteilanlage festlegt.

Herkömmliche Energieverteilanlagen benutzen zum Verteilen der elektrischen Energie elektromechanische Schalter, bei denen Schaltkontakte bewegt, nämlich geschlossen oder geöffnet, werden, um einen Stromfluss zu ermöglichen oder zu verhindern. Die Anschlussstellen sind üblicherweise jeweils über einen Schalter an eine Sammelschiene angeschlossen, über die eine Verbindung der Anschlussstellen miteinander ermöglicht wird.

In der WO 95/15605 A1 (vergl. den Oberbegriff des Anspruchs 1) ist eine Energieübertragungsanlage beschrieben, bei der zwei Umrichter durch eine Gleichspannungsleitung miteinander verbunden sind. In der Gleichspannungsleitung ist eine Anordnung von Halbleiterschaltern vorgesehen, mittels der durch eine geeignete Schaltungssteuerung der Halbleiterschalter eine Wechselspannung aus der Gleichspannungsleitung entnommen werden kann. Dazu bilden die Halbleiterschalter eine Ringstruktur zwischen Verbindungsanschlüssen der Gleichspannungsleitung und zwei Wechselspannungsanschlüssen aus.

Aus der DE 1 538 266 A1 ist eine Vorrichtung zur Zusammenschaltung getrennter Stromrichtersysteme bekannt. Bei der bekannten Vorrichtung werden Leistungstrennschalter eingesetzt, die eine Ringstruktur bilden.

Der Erfindung liegt die Aufgabe zugrunde, eine Energieverteilanlage anzugeben, die zum Verteilen von Gleichspannung bzw. Gleichstrom besonders geeignet ist.

Diese Aufgabe wird erfindungsgemäß durch eine Energieverteilanlage mit den Merkmalen gemäß Patentanspruch 1 und ein Verfahren zum Verteilen elektrischer Energie gemäß Patentanspruch 5 gelöst. Vorteilhafte Ausgestaltungen der erfindungsgemäßen Energieverteilanlage sind in Unteransprüchen angegeben.

Danach ist erfindungsgemäß vorgesehen, dass die Schalter Halbleiterschalter sind und die Halbleiterschalter oder eine Untermenge der Halbleiterschalter eine Ringstruktur bilden.

Ein wesentlicher Vorteil der erfindungsgemäßen Energieverteilanlage besteht darin, dass zur Energieverteilung Halbleiterschalter vorgesehen sind, die eine hohe Schaltgeschwindigkeit aufweisen.

Ein weiterer wesentlicher Vorteil der erfindungsgemäßen Energieverteilanlage besteht darin, dass die erfindungsgemäß vorgesehenen Halbleiterschalter insgesamt oder aber zumindest eine Untermenge davon eine Ringstruktur bilden. Durch eine Ringstruktur kann sich erreichen lassen, dass Anschlussstellen der Energieverteilanlage miteinander über lediglich einen einzigen Halbleiterschalter miteinander verbunden werden, so dass die Verlustleistung in den Halbleiterschaltern minimiert werden kann. Im Unterschied zu den eingangs erwähnten elektromechanischen Schaltern weisen Halbleiterschalter nämlich aufgrund des technisch bedingt auftretenden Spannungsabfalls stets unvermeidliche Verlustleistung auf, die bei der erfindungsgemäß vorgesehenen Ringstruktur der Halbleiterschalter reduziert wird.

Bei der Energieverteilanlage handelt es sich vorzugsweise um eine Gleichstrom- bzw. Gleichspannungsenergieverteilanlage, die für Hochspannung geeignet ist und mit anderen Worten vorzugsweise eine elektrische Hochspannungsschaltanlage bildet. Die Halbleiterschalter sind demgemäß vorzugsweise zum Schalten von Hochspannung geeignet.

Bei den Halbleiterschaltern handelt es sich vorzugsweise um Feldeffekttransistoren, bipolare Transistoren, Thyristoren, IGBTs (Bipolartransistoren mit isolierter Gate-Elektrode) oder Schaltelemente, die derartige Komponenten zumindest auch umfassen.

Um eine Energieverteilung auch im Fehlerfalle zu gewährleisten, wird es als vorteilhaft angesehen, wenn die Halbleiterschalter eine Ringstruktur bilden, durch die jede der Anschlussstellen jeweils mit zwei anderen Anschlussstellen verbunden wird, und jede Anschlussstelle jeweils elektrisch zwischen zwei in der Ringstruktur benachbarte Halbleiterschalter geschaltet ist.

Wie bereits erwähnt, weisen Halbleiterschalter elektrische Verluste auf, wenn sie von hohen Strömen durchflossen werden. Demgemäß ist erfindungsgemäß jede Anschlussstelle jeweils mit jeder anderen Anschlussstelle über genau einen einzigen Halbleiterschalter, also elektrisch auf direktem Weg, verbunden. Bei dieser Ausgestaltung der Energieverteilanlage ist also sichergestellt, dass ein Stromfluss von einer Anschlussstelle zu einer anderen Anschlussstelle stets über lediglich einen einzigen Halbleiterschalter erfolgt, so dass der Stromfluss auch nur in diesem Halbleiterschalter zu elektrischen Verlusten führen kann.

Mit Blick auf einen kompakten Aufbau der Energieverteilanlage weist die Energieverteilanlage genau drei Anschlussstellen auf.

Weist die Energieverteilanlage eine größere Zahl an Anschlussstellen auf, so wird es als vorteilhaft angesehen, wenn eine Untermenge der Halbleiterschalter einen äußeren Ring und eine weitere Untermenge der Halbleiterschalter mindestens einen inneren Ring bildet, wobei durch den oder die inneren Ringe eine Untermenge der von der äußeren Ringstruktur verbundenen Anschlussstellen miteinander über genau einen einzigen Halbleiterschalter, also elektrisch direkt, verbunden wird.

Die Erfindung bezieht sich darüber hinaus auf ein Verfahren zum Verteilen elektrischer Energie, wobei eine Energieverteilanlage mit einer Mehrzahl an Anschlussstellen, an denen elektrischer Gleichstrom in die Energieverteilanlage eingespeist oder entnommen werden kann, und einer Mehrzahl an Schaltern, deren jeweilige Schaltstellung den Stromfluss innerhalb der Energieverteilanlage festlegt, verwendet wird und wobei die Verteilung der elektrischen Energie durch Ein- oder Ausstellen der Schalter bestimmt wird.

Bezüglich eines solchen Verfahrens wird es als vorteilhaft angesehen, wenn der Strom innerhalb der Energieverteilanlage mittels Halbleiterschalter geschaltet wird, die oder von denen eine Untermenge eine Ringstruktur bilden.

Bezüglich der Vorteile des erfindungsgemäßen Verfahrens sei auf die obigen Ausführungen im Zusammenhang mit der erfindungsgemäßen Energieverteilanlage verwiesen, da die Vorteile der erfindungsgemäßen Energieverteilanlage denen des erfindungsgemäßen Verfahrens im Wesentlichen entsprechen.

Die Erfindung wird nachfolgend anhand von Ausführungsbeispielen näher erläutert; dabei zeigen beispielhaft:
- Figur 1: ein Ausführungsbeispiel für eine erfindungsgemäße Energieverteilanlage, die mit drei Halbleiterschaltern ausgestattet ist,
- Figur 2: ein Beispiel für eine Energieverteilanlage, die mit vier in einer Ringstruktur angeordneten Halbleiterschaltern ausgestattet ist und
- Figur 3: ein Beispiel für eine Energieverteilanlage, bei der eine Untermenge der Halbleiterschalter einen äußeren Ring und andere Untermengen der Halbleiterschalter innere Ringe bilden.

In den Figuren werden der Übersicht halber für identische oder vergleichbare Komponenten stets dieselben Bezugszeichen verwendet.

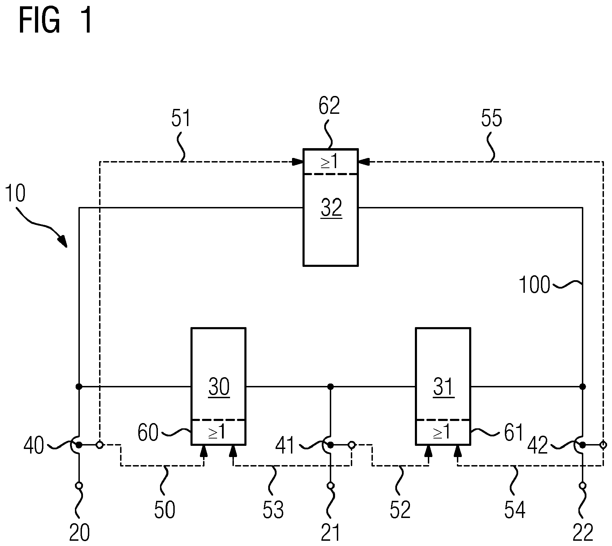

In der Figur 1 sieht man eine Gleichstrom-Energieverteilanlage 10 - nachfolgend kurz Energieverteilanlage 10 genannt -, die zum Verteilen elektrischer Energie in Form elektrischer Gleichspannung geeignet ist.

Die Energieverteilanlage 10 umfasst drei elektrische Anschlussstellen 20, 21 und 22, an denen elektrischer Gleichstrom in die Energieverteilanlage 10 eingespeist oder aus dieser entnommen werden kann. Zum Verbinden der Anschlussstellen 20, 21 und 22 miteinander sind drei Halbleiterschalter 30, 31 und 32 vorgesehen.

Die drei Halbleiterschalter 30, 31 und 32 sind zum Schalten von Hochspannung geeignet und bilden eine Ringstruktur 100, bei der jede der drei Anschlussstellen 20, 21 und 22 jeweils elektrisch zwischen zwei in der Ringstruktur 100 benachbarte Halbleiterschalter geschaltet ist.

Durch die Ringstruktur 100 ist es bei der Energieverteilanlage 10 gemäß Figur 1 möglich, jede Anschlussstelle 20, 21 und 22 jeweils mit jeder anderen Anschlussstelle genau über einen einzigen Halbleiterschalter elektrisch auf direktem Wege zu verbinden. Ein Gleichstrom, der von einer Anschlussstelle zu einer anderen Anschlussstelle über die Energieverteilanlage 10 fließen will, muss also nur einen der drei Halbleiterschalter passieren. Die elektrische Verlustleistung, die durch diesen Gleichstrom in der Energieverteilanlage 10 hervorgerufen wird, ist also auf einen einzigen Halbleiterschalter beschränkt.

Um im Fehlerfalle ein Abtrennen der vom Fehler betroffenen Anschlussstelle zu ermöglichen, ist die Energieverteilanlage 10 mit drei Fehlererkennungseinrichtungen 40, 41 und 42 ausgestattet, die über Steuerverbindungen 50 bis 55 mit Auslöseeinrichtungen 60, 61 und 62 der Energieverteilanlage 10 in Verbindung stehen.

Die Auslöseeinrichtung 60 ist dem Halbleiterschalter 30 zugeordnet und dient dazu, den Halbleiterschalter 30 abzuschalten, wenn ein entsprechendes Auslösesignal eingangsseitig anliegt. Ein solches Auslösesignal kann beispielsweise von der Fehlererkennungseinrichtung 40 über die Steuerverbindung 50 und/oder von der Fehlererkennungseinrichtung 41 über die Steuerverbindung 53 übermittelt werden.

In entsprechender Weise arbeiten die Auslöseeinrichtungen 61 und 62, die ein Abschalten der zugeordneten Halbleiterschalter 31 und 32 hervorrufen können, wenn entsprechende Auslösesignale eingangsseitig vorliegen: Wie sich in der Figur 1 erkennen lässt, ist die Auslöseeinrichtung 61 nämlich eingangsseitig über die Steuerverbindung 52 mit der Fehlererkennungseinrichtung 41 und über die Steuerverbindung 54 mit der Fehlererkennungseinrichtung 42 verbunden, und die Auslöseeinrichtung 62 steht über die Steuerverbindungen 51 und 55 mit der Fehlererkennungseinrichtung 40 und mit der Fehlererkennungseinrichtung 42 in Verbindung.

Stellt also eine der Fehlererkennungseinrichtungen 40, 41 oder 42 einen Fehler fest, so kann sie durch die Ansteuerung der elektrisch benachbarten Auslöseeinrichtungen ein Abschalten der elektrisch benachbarten Schalter hervorrufen, so dass die vom Fehler betroffene Anschlussstelle von den übrigen Anschlussstellen elektrisch getrennt wird.

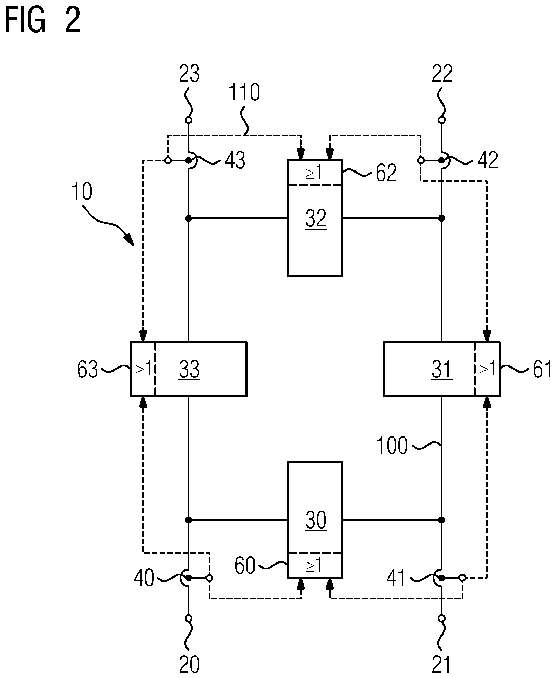

Die Figur 2 zeigt ein Beispiel für eine Energieverteilanlage Dieses Beispiel ist nicht Teil der Erfindung. Im Unterschied zu der Energieverteilanlage gemäß Figur 1 ist die Energieverteilanlage gemäß Figur 2 mit vier Anschlussstellen ausgestattet, die mit den Bezugszeichen 20, 21, 22 und 23 gekennzeichnet sind. Zur Verbindung der Anschlussstellen miteinander sind vier Halbleiterschalter 30, 31, 32 und 33 vorgesehen, die elektrisch eine Ringstruktur 100 bilden. Durch die Ringstruktur 100 wird jede der vier Anschlussstellen jeweils mit zwei anderen Anschlussstellen verbunden. Dabei ist jede Anschlussstelle jeweils elektrisch zwischen zwei in der Ringstruktur benachbarte Halbleiterschalter geschaltet.

Wie sich in der Figur 2 darüber hinaus erkennen lässt, sind auch die Halbleiterschalter 30 bis 33 jeweils mit Auslöseeinrichtungen versehen, die mit den Bezugszeichen 60 bis 63 gekennzeichnet sind. Zur Ansteuerung der vier Auslöseeinrichtungen 60 bis 63 sind vier Fehlererkennungseinrichtungen 40 bis 43 vorgesehen, die jeweils einer der Anschlussstellen 20 bis 23 zugeordnet sind. Jede der Fehlererkennungseinrichtungen steht jeweils über zwei Steuerverbindungen 110 mit zwei Auslöseeinrichtungen und damit mit zwei Halbleiterschaltern in Verbindung und ist somit in der Lage, die jeweils zugeordnete Anschlussstelle von den übrigen Anschlussstellen bzw. von der Ringstruktur insgesamt durch Abschalten der beiden elektrisch benachbarten Halbleiterschalter zu trennen.

Bei dem Beispiel gemäß Figur 2 bilden die Halbleiterschalter zwar eine Ringstruktur 100, wie dies bei dem Ausführungsbeispiel gemäß Figur 1 ist, jedoch ist die Anzahl der Halbleiterschalter nicht ausreichend, um jede der Anschlussstellen jeweils mit jeder anderen Anschlussstelle über genau einen einzigen Halbleiterschalter auf direktem Wege zu verbinden. Wenn also ein Gleichstrom beispielsweise von der Anschlussstelle 20 zu der Anschlussstelle 22 geschaltet werden soll, so muss dieser Strom mindestens zwei der vier Halbleiterschalter passieren, beispielsweise die Halbleiterschalter 30 und 31 und/oder die Halbleiterschalter 32 und 33.

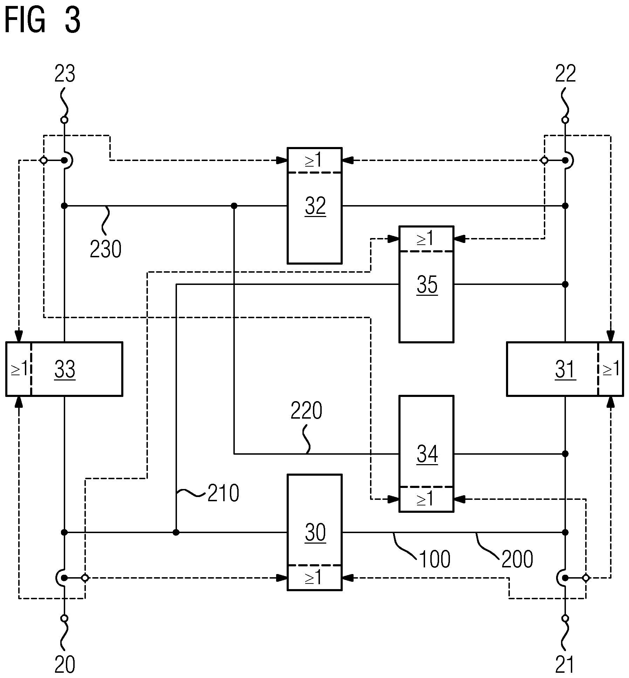

Die Figur 3 zeigt ein zweites Beispiel für eine Energieverteilanlage 10. Dieses Beispiel ist nicht Teil der Erfindung. Auch bei der Energieverteilanlage gemäß Figur 3 sind vier Anschlussstellen 20 bis 23 vorhanden, die elektrisch über Halbleiterschalter miteinander verbindbar sind. Im Unterschied zu dem Beispiel gemäß Figur 2 sind zum Verbinden der elektrischen Anschlussstellen 20 bis 23 miteinander nicht nur vier Halbleiterschalter 30 bis 33 vorhanden, sondern insgesamt sechs Halbleiterschalter 30 bis 35. Durch die zwei zusätzlich vorgesehenen Halbleiterschalter 34 und 35 ist es möglich, jede der Anschlussstellen jeweils mit jeder anderen Anschlussstelle über genau einen einzigen Halbleiterschalter auf direktem Wege zu verbinden.

Durch die sechs Halbleiterschalter 30 bis 35 werden in der Ringstruktur 100 ein äußerer Ring 200 sowie drei innere Ringe 210, 220 und 230 gebildet. Der äußere Ring 200 der Ringstruktur 100 umfasst die Halbleiterschalter 30, 31, 32 und 33.

Eine Untermenge der Halbleiterschalter, nämlich die Halbleiterschalter 30, 31 und 35, bilden einen inneren Ring 210 der Ringstruktur 100.

Ein weiterer innerer Ring 220 der Ringstruktur 100 wird durch die Halbleiterschalter 31, 32 und 34 gebildet.

Ein dritter Ring 230 der Ringstruktur 100 umfasst die Halbleiterschalter 32, 33 und 35.

Durch das Integrieren der inneren Ringe 210, 220 und 230 in die Ringstruktur 100 bzw. durch das Vorsehen der zusätzlichen Schalter 34 und 35 ist es bei der Energieverteilanlage 10 gemäß Figur 3 - im Unterschied zu der Energieverteilanlage 10 gemäß Figur 2 - möglich, jede der vier Anschlussstellen 20 bis 23 jeweils mit jeder anderen Anschlussstelle unmittelbar über einen einzigen Halbleiterschalter zu verbinden. Soll also beispielsweise ein Strom von der Anschlussstelle 20 zu der Anschlussstelle 22 geleitet werden, so kann dies auf unmittelbarem Wege allein über den Halbleiterschalter 35 erfolgen, so dass auch nur in diesem Halbleiterschalter 35 durch diesen Stromfluss elektrische Verluste auftreten können. In entsprechender Weise können die übrigen Anschlussstellen unmittelbar miteinander verbunden werden.

Das unmittelbare Verbinden der Anschlussstellen miteinander auf elektrisch direktem Wege, wie es bei den Ausführungsbeispielen gemäß den Figuren 1 und 3 der Fall ist, bietet den Vorteil, dass lediglich in einem einzigen Halbleiterschalter elektrische Verluste auftreten, wenn zwei Anschlussstellen miteinander verbunden werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Energieverteilanlage
- 20: Anschlussstelle
- 21: Anschlussstelle
- 22: Anschlussstelle
- 23: Anschlussstelle
- 30: Halbleiterschalter
- 31: Halbleiterschalter
- 32: Halbleiterschalter
- 33: Halbleiterschalter
- 34: Halbleiterschalter
- 35: Halbleiterschalter
- 40: Fehlererkennungseinrichtung
- 41: Fehlererkennungseinrichtung
- 42: Fehlererkennungseinrichtung
- 43: Fehlererkennungseinrichtung
- 50 - 55: Steuerverbindungen
- 60: Auslöseeinrichtung
- 61: Auslöseeinrichtung
- 62: Auslöseeinrichtung
- 63: Auslöseeinrichtung
- 100: Ringstruktur
- 110: Steuerverbindung
- 200: äußerer Ring
- 210: innerer Ring
- 220: innerer Ring
- 230: innerer Ring

## Patentansprüche

1. Energieverteilanlage (10) zum Verteilen elektrischer Energie mit
- einer Mehrzahl an Anschlussstellen (20-22), an denen elektrischer Gleichstrom in die Energieverteilanlage (10) eingespeist oder entnommen werden kann, und
- einer Mehrzahl an Schaltern, deren jeweilige Schaltstellung den Stromfluss innerhalb der Energieverteilanlage (10) festlegt, wobei
- die Schalter Halbleiterschalter (30-35) sind und
- die Halbleiterschalter (30-35) oder eine Untermenge der Halbleiterschalter (30-35) eine Ringstruktur (100) bilden,
- **dadurch gekennzeichnet, dass**
- jede Anschlussstelle (20-22) jeweils mit jeder anderen Anschlussstelle (20-23) über genau einen einzigen Halbleiterschalter (30-35) verbunden ist, und dass die Energieverteilanlage (10) genau drei Anschlussstellen (20-22) aufweist.

2. Energieverteilanlage nach Anspruch 1,
**dadurch gekennzeichnet, dass**
- die Energieverteilanlage eine Hochspannungsschaltanlage ist und
- die Halbleiterschalter (30-35) zum Schalten von Hochspannung geeignet sind.

3. Energieverteilanlage nach einem der voranstehenden Ansprüche,
**dadurch gekennzeichnet, dass**
- die Halbleiterschalter (30-35) eine Ringstruktur (100) bilden, durch die jede der Anschlussstellen (20-22) jeweils mit zwei anderen Anschlussstellen verbunden wird, und
- jede Anschlussstelle (20-22) jeweils elektrisch zwischen zwei in der Ringstruktur (100) benachbarte Halbleiterschalter (30-35) geschaltet ist.

4. Energieverteilanlage nach einem der voranstehenden Ansprüche,
**dadurch gekennzeichnet, dass**
- eine Untermenge der Halbleiterschalter (30-35) einen äußeren Ring (200) und eine andere Untermenge der Halbleiterschalter (30-35) zumindest einen inneren Ring (210, 220, 230) bildet,
- wobei durch den inneren Ring (210, 220, 230) eine Untermenge der von dem äußeren Ring (200) verbundenen Anschlussstellen miteinander über genau einen einzigen Halbleiterschalter verbunden wird.

5. Verfahren zum Verteilen elektrischer Energie, wobei eine Energieverteilanlage (10) mit einer Mehrzahl an Anschlussstellen (20-22), an denen elektrischer Gleichstrom in die Energieverteilanlage eingespeist oder entnommen werden kann, und einer Mehrzahl an Schaltern, deren jeweilige Schaltstellung den Stromfluss innerhalb der Energieverteilanlage (10) festlegt, verwendet wird und wobei die Verteilung der elektrischen Energie durch Ein- oder Ausstellen der Schalter bestimmt wird, wobei jede Anschlussstelle (20-22) jeweils mit jeder anderen Anschlussstelle (20-22) über genau einen einzigen Halbleiterschalter (30-32) verbunden ist, und die Energieverteilanlage (10) genau drei Anschlussstellen (20-22) aufweist, bei dem der Strom innerhalb der Energieverteilanlage (10) mittels Halbleiterschalter (30-35) geschaltet wird, die oder von denen eine Untermenge eine Ringstruktur (100) bilden.

## Claims

1. Energy distribution system (10) for distributing electrical energy, having
- a plurality of connection points (20-22), at which electrical direct current can be fed into the energy distribution system (10) or can be taken therefrom, and
- a plurality of switches, the respective switching position of which determines the current flow inside the energy distribution system (10), wherein
- the switches are semiconductor switches (30-35), and
- the semiconductor switches (30-35) or a subset of the semiconductor switches (30-35) form(s) a ring structure (100),
- **characterized in that**
- each connection point (20-22) is respectively connected to every other connection point (20-23) via precisely one single semiconductor switch (30-35), and **in that** the energy distribution system (10) has precisely three connection points (20-22).

2. Energy distribution system according to Claim 1,
**characterized in that**
- the energy distribution system is high-voltage switchgear, and
- the semiconductor switches (30-35) are suitable for switching high voltage.

3. Energy distribution system according to one of the preceding claims,
**characterized in that**
- the semiconductor switches (30-35) form a ring structure (100) which is used to connect each of the connection points (20-22) to two other connection points in each case, and
- each connection point (20-22) is respectively electrically connected between two semiconductor switches (30-35) which are adjacent in the ring structure (100).

4. Energy distribution system according to one of the preceding claims,
**characterized in that**
- one subset of the semiconductor switches (30-35) forms an outer ring (200) and another subset of the semiconductor switches (30-35) forms at least one inner ring (210, 220, 230),
- wherein a subset of the connection points connected by the outer ring (200) is connected via precisely one single semiconductor switch by means of the inner ring (210, 220, 230) .

5. Method for distributing electrical energy, wherein an energy distribution system (10) having a plurality of connection points (20-22), at which electrical direct current can be fed into the energy distribution system or can be taken therefrom, and a plurality of switches, the respective switching position of which determines the current flow inside the energy distribution system (10), is used, and wherein the distribution of the electrical energy is determined by turning the switches on or off, wherein each connection point (20-22) is respectively connected to every other connection point (20-22) via precisely one single semiconductor switch (30-32), and the energy distribution system (10) has precisely three connection points (20-22), in which the current is switched inside the energy distribution system (10) by means of semiconductor switches (30-35) which form, or a subset of which forms, a ring structure (100).

## Revendications

1. Dispositif (10) de distribution d'énergie, pour distribuer de l'énergie électrique, comprenant
- une pluralité de points (20 à 22) de connexion où du courant électrique continu peut être injecté dans le dispositif (10) de distribution d'énergie ou peut en être prélevé et
- une pluralité d'interrupteurs, dont la position d'interruption respective fixe le flux du courant dans le dispositif (10) de distribution d'énergie, dans lequel
- les interrupteurs sont des interrupteurs (30 à 35) à semi-conducteur et
- les interrupteurs (30 à 35) à semi-conducteur ou un sous-ensemble des interrupteurs (30 à 35) à semi-conducteur forment une structure (100) annulaire,
- **caractérisé en ce que**
- chaque point (20 à 22) de connexion est relié respectivement à chaque autre point (20 à 23) de connexion par exactement un interrupteur (30 à 35) à semi-conducteur unique et **en ce que** le dispositif (10) de distribution d'énergie a exactement trois points (20 à 22) de connexion.

2. Dispositif de distribution d'énergie suivant la revendication 1,
**caractérisé en ce que**
- le dispositif de distribution d'énergie est un dispositif de distribution de haute tension et
- les interrupteurs (30 à 35) à semi-conducteur sont propres au passage de la haute tension.

3. Dispositif de distribution d'énergie suivant l'une des revendications précédentes,
**caractérisé en ce que**
- les interrupteurs (30 à 35) à semi-conducteur forment une structure (100) annulaire, par laquelle chaque point (20 à 22) de connexion est relié respectivement à deux autres points de connexion et
- chaque point (20 à 22) de connexion est monté respectivement électriquement entre deux interrupteurs (30 à 35) à semi-conducteur voisins dans la structure (100) annulaire.

4. Dispositif de distribution d'énergie suivant l'une des revendications précédentes,
**caractérisé en ce que**
- un sous-ensemble des interrupteurs (30 à 35) à semi-conducteur forme un anneau (200) extérieur et un autre sous-ensemble des interrupteurs (30 à 35) à semi-conducteur forme au moins un anneau (210, 220, 230) intérieur,
- dans lequel, par l'anneau (210, 220, 230) intérieur, un sous-ensemble des points de connexion, reliés par l'anneau (200) extérieur, sont reliés entre eux par exactement un interrupteur à semi-conducteur unique.

5. Procédé de distribution d'énergie électrique, en utilisant un dispositif (10) de distribution d'énergie électrique ayant une pluralité de points (20 à 22) de connexion où du courant électrique continu peut être injecté dans le dispositif (10) de distribution d'énergie ou peut en être prélevé et une pluralité d'interrupteurs, dont la position d'interruption respective fixe le flux du courant dans le dispositif (10) de distribution d'énergie, et dans lequel la répartition de l'énergie électrique est déterminée par la fermeture ou l'ouverture des interrupteurs, dans lequel chaque point (20 à 22) de connexion est relié respectivement à chaque autre point (20 à 22) de connexion par exactement un interrupteur (30 à 32) à semi-conducteur unique et le dispositif (10) de distribution d'énergie a exactement trois points (20 à 22) de connexion, dans lequel le courant passe dans le dispositif (10) de distribution d'énergie au moyen d'interrupteurs (30 à 35) à semi-conducteur, qui ou dont un sous-ensemble forment une structure (100) annulaire.
